# EUROPÄISCHE PATENTSCHRIFT

(11) **EP 1 289 665 B1**
(45) Veröffentlichungstag und Bekanntmachung des Hinweises auf die Patenterteilung: **07.09.2005**
(21) Anmeldenummer: 01945267.1
(22) Anmeldetag: 07.06.2001
(51) Int. Cl.: B03B 9/06, B09B 3/00

(54) **VERFAHREN ZUR AUFBEREITUNG VON ABFALL**
METHOD FOR TREATING WASTE
PROCEDE POUR LE TRAITEMENT DE DECHETS

(30) Priorität: 16.06.2000 DE 10028976
(43) Veröffentlichungstag der Anmeldung: 12.03.2003
(73) Patentinhaber: Stadler Anlagenbau GmbH, 88361 Altshausen (DE); Bio-System Selecta GmbH, 78467 Konstanz (DE)
(72) Erfinder: BUSACK, Clas, 02763 Zittau (DE); FREHLAND, Eckart, 78465 Konstanz (DE); GÖGGL, Roland, 88069 Tettnang (DE); HOFFMANN, Hans, 88260 Argenbühl (DE); JÜRGENS, Christian, 28203 Bremen (DE); KRÄMER, Heribert, 78467 Konstanz (DE); SCHULZE, Manfred, 12679 Berlin (DE); SCHUSTER, Michael, 78462 Konstanz (DE); STADLER, Willi, 88361 Altshausen (DE)
(74) Vertreter: Weiss, Peter
(86) Internationale Anmeldenummer: PCT/EP2001/006490
(87) Internationale Veröffentlichungsnummer: WO 2001/096022

(56) Entgegenhaltungen:
- EP-A- 0 099 261
- EP-A- 0 542 495
- EP-A- 0 672 457
- DE-A- 2 803 684
- DE-A- 19 650 103
- NL-A- 8 400 232
- US-A- 3 405 873

## Beschreibung

Die Erfindung betrifft ein Verfahren zur Aufbereitung von Abfall, Müll, Hausmüll, Restmüll, Gewerbemüll od. dgl., welcher in wenigstens einem Bunker gesammelt, anschliessend zumindest einer Konditioniereinrichtung, insbesondere Konditioniertrommel zur Konditionierung zugeführt wird.

Derartige Verfahren sind in vielfältiger Form und Ausführung im Markt bekannt. Mit ihnen wird insbesondere Abfall aus Müll oder aus müllähnlichem Gewerbemüll und Restmüll sowie Reste aus DSD und ähnlichen Müllzusammensetzungen in einem Bunker eingelagert und von einem Bunker einer Konditioniereinrichtung meist einer Konditioniertrommel manuell zugeführt.

Dann erfolgt ein langwieriger Konditionierprozess um den Abfall zu homogenisieren.

Nach dem Homogenisieren wird bei herkömmlichen Verfahren die Konditioniereinrichtung weitgehend entleert und dann der konditionierte Abfall beispielsweise über einen Metallabscheider weiter bearbeitet.

Nachteilig daran ist, dass ein derartiges diskontinuierliches Verfahren langsam und schlecht zu regeln ist, da viele einzelne Schritte notwendig sind, um beispielsweise die Konditioniereinrichtung zu bestücken, anschliessend der Konditionierprozess durchzuführen und nach der Homogenisierung und Konditionierung der Abfall zur Weiterverarbeitung weiteren Einrichtungen zuzuführen. Diese im Stand der Technik bekannte Verfahren sind kostenintensiv zu betreiben, da grosse Bunker- und Trommelvolumen erforderlich sind.

Zudem ist nachteilig, dass eine exakte Trennung und Aufbereitung von herkömmlichem Abfall, insbesondere von beliebigem Hausmüll, Restmüll, DSD-Restmüll, Gewerbeabfällen od. dgl. nicht ohne weiteres möglich ist. Ebenfalls ist eine exakte saubere Trennung dieses herkömmlichen Abfalles in einzelne nahezu reine Fraktionen nicht möglich.

Die DE 196 50 103 beschreibt ein Verfahren zur Verwertung von Restabfall, bei welchem der Restabfall in einem ersten Verfahrensschritt separiert wird, in dem Störstoffe entfernt und heizwertreiche Materialien aussortiert werden. Die verbleibende Fraktion gelangt dann in eine Homogenisierungstrommel und wird unter Beimischung von Klärschlamm homogenisiert und anschliessend einer biologischen Aufbereitung zugeführt.

Die EP 0 099 261 beschreibt ein Verfahren zur Aufbereitung von Abfall, bei welchem Abfall in einer Konditioniereinrichtung getrocknet und pulversiert wird.

Die US 3,405,873 beschreibt eine Konditioniertrommel zum Konditionieren von Abfall.

Der vorliegenden Erfindung liegt die Aufgabe zugrunde ein Verfahren sowie eine Anlage zur Durchführung des Verfahrens zu schaffen, mit welchen die o.g. Nachteile beseitigt werden. Ferner sollen aus dem Abfall Organikteile besser herauszuseparieren und kalorisch wertvolle Sekundärfremdstoffe weitgehend auszuscheiden sein, so dass eine deponiefähige und/oder müllverbrennungsanlagenfähige Restfraktion verbleibt. Dabei soll insbesondere auf das Verfahren zur Aufbereitung von Abfall wesentlich beschleunigt werden bei Reduktion der Anlagenkosten.

Zur Lösung dieser Aufgabe führen die Merkmale des Patentanspruches 1.

Bei der vorliegenden Erfindung ist von Bedeutung, dass kontinuierlich der Abfall, welcher Bunkern oder ähnlichen zugeführt wird, kontinuierlich einer Konditioniereinrichtung zugeführt wird und innerhalb der Konditioniereinrichtung kontinuierlich den Konditionierprozess durchläuft und anschliessend kontinuierlich zur weiteren Aufbereitung, insbesondere einem Balistikseparator zugeführt wird. Dazwischen können unter Umständen Siebabschnitte oder Metallabscheider eingesetzt sein, um eine Feinfraktion oder eine Metallfraktion vorab zu separieren.

Insbesondere das kontinuierliche Konditionieren und Homogenisieren des Abfalls, insbesondere der Abfallfraktion in der durchlaufenden Konditioniereinrichtung gewährleistet, dass der Aufbereitungsprozess vollautomatisiert permanent gefahren werden kann. Dabei erfolgt in einer Separiereinrichtung, beispielsweise in einem Balistikseparator, wie er in der DE 100 14 812 beschrieben ist, eine Separation in eine Schwerfraktion, eine Leichtfraktion und eine Feinfraktion. Die Schwerfraktion wird über entsprechende Transportmittel direkt der Deponie oder Müllverbrennungsanlage oder einen entsprechenden Bunker zur Aufnahme der Schwerfraktion zugeführt. Ggf. kann die Schwerfraktion nochmals aufbereitet oder separiert werden, um weitere Wertstoffe aus dieser Fraktion zu erhalten.

Die Leichtfraktion wird beispielsweise über entsprechende Transportmittel einem Zerkleinerer oder Bunker ggf. einem Metallabscheider und einem Nichtmetallabscheider zugeführt, wobei Metallabscheider und Nichtmetallabscheider vor und/oder nach dem Zerkleinerer angeordnet sein können. Im Zerkleinerer wird die Leichtfraktion, die im wesentlichen aus kalorischen Fraktionen besteht, zerkleinert und ggf. zu Pellets od. dgl. weiterverarbeitet. Hierdurch entsteht ein wirtschaftlich verwertbarer Sekundärbrennstoff.

Die aus der Separiereinrichtung ausgeschiedene Feinfraktion wird nach einer zusätzlich zwischengeschalteten Reinigungsstufe einer biologischen Stufe zugeführt, in welcher eine biologische Behandlung durch aerobe und/oder anaerobe Verfahren zur Reduktion der Organikanteil durchgeführt wird. Es können weitere Separationsschritte der verbleibenden Fraktion erfolgen, in welcher beispielsweise verbleibende Metalle ganz oder höher belastete Schlämme weiter separiert werden. Ggf. können diese verbleibenden Reste zur Rekultivierung oder Kompostierung weiterverwertet werden.

Bei der vorliegenden Erfindung ist ein Verfahren sowie eine Anlage zur Durchführung des Verfahrens geschaffen, bei welcher der Müll im wesentlichen von seinen wirtschaftlich verwendbaren Inhaltsstoffen entlastet wird und diese zur Weiterverwendung separiert werden. Zudem gewährleistet die anaerobe biologische Stufe eine Energiegewinnung. Ferner werden die Feststoffe des ursprünglichen Abfalls richtlinienkonform in sehr geringen Mengen den Deponien zugeführt, was erhebliche Kosteneinsparungen zur Folge hat. Es stellt sich durch das vorliegende Verfahren ein sehr hoher Reinheitsgrad der Leichtfraktion SBS bzw. EBS ein, was insbesondere die Ersatzbrennstoffe und deren Verwertbarkeit erhöht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen Verfahrensablauf zur Aufbereitung von Abfall;
Figur 2 eine schematisch dargestellte Anlage zur Aufbereitung von Abfall.

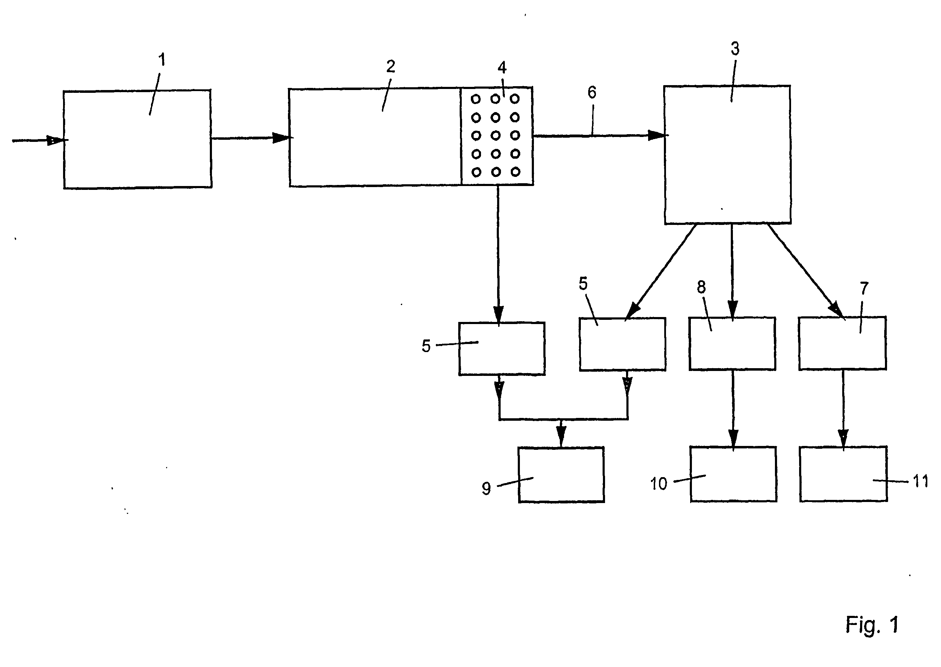

Gemäss Figur 1 wird bei einem erfindungsgemässen Verfahren zur Aufbereitung von beliebigem Abfall, wie Müll, Hausmüll, Restmüll, Gewerbemüll sowie DSD-Resten der Abfall über eine Aufgabe einem Bunker 1 zugeführt. Anschliessend wird dieser Abfall einer Konditioniereinrichtung 2 zugeführt. Dabei ist von wesentlicher Bedeutung bei der vorliegenden Erfindung, dass die Zuführung und Konditionierung des aufzubereitenden Abfalls kontinuierlich in der Konditioniereinrichtung 2, insbesondere in der Konditioniertrommel erfolgen und diese kontinuierlich den konditionierten und aufbereitetem Abfall nach einem kontinuierlichen Durchlaufen an eine Separiereinrichtung, insbesondere an einen Balistikseparator 3 weiterleitet. Ggf. kann der Konditioniereinrichtung 2 ein Siebeabschnitt 4 direkt oder als separate Einrichtung zugeordnet sein, um eine Feinfraktion 5 am Ende der Konditionierung bzw. am Ende der Konditioniereinrichtung 2 kontinuierlich zu separieren. Ein Überlauf 6 aus der Konditioniereinrichtung 2 wird dem Balistikseparator 3 zugeleitet. Ggf. kann ein Metallabscheider 15 zweischen Konditioniereinrichtung 2 bzw. Siebabschnitt 4 und dem Balistikseparator 3 vorgesehen sein.

Im Balistikseparator 3, wie er beispielsweise in der DE 100 14 812 beschrieben ist, erfolgt eine Separierung des in der Konditioniereinrichtung 2 aufbereiteten Abfalls. Da der Abfall in der Konditioniereinrichtung 2 kontinuierlich durch diese befördert wird und homogenisiert wird, wobei eine Zuführung von Feuchtigkeit in Form von Schlamm, Wasser, Gülle oder Nassabfall od. dgl. erfolgt damit sich die gewünschte Eingangsfeuchtigkeit zur Separierung der Organikanteile aus dem Müllabfall einstellt, lässt sich dieses Verfahren ohne Unterbrechung betreiben.

Diese aufbereitete Fraktion bzw. dieser Überlauf 6 an Abfall wird im Balistikseparator 3 in eine Schwerfraktion 7 eine Leichtfraktion 8 und in eine Feinfraktion 5 separiert. Die Feinfraktion 5 wird ggf. mit der Feinfraktion des Siebabschnittes 4 zusammengeführt und einer biologischen Stufe 9 zur Weiterverarbeitung, zur biologischen Behandlung weitergeleitet. Ferner kann die biologische Fraktion, insbesondere Feinfraktion 5 durch Prozesswasser, Schlämme oder Nassabfälle weiter konditioniert werden, wobei in der biologischen Stufe 9 im wesentlichen durch die Kombination von anaeroben und aeroben Behandlungsverfahren der Organikanteil weiter ausgewertet und hierdurch abgebaut wird. Ggf. können weitere Trennverfahren wie beispielsweise Nichtmetallabscheider 18 od. dgl. der biologischen Stufe 9 vor- oder nachgeschaltet sein.

Die Leichtfraktion 8 kann ggf. über Zerkleinerungsstufen weiteren Nichtmetallabscheidern 18 und/oder Metallabscheidern 15 zum hochkalorisch wertvollen Ersatzbrennstoff 10 oder Sekundärbrennstoff zerkleinert und/oder pellepiert werden.

Die Schwerfraktion 7, die aus dem Balistikseparator 3 ausgeschieden wird, wird direkt oder ggf. über eine Zwischenlagerung einer Deponie 11 zur Deponierung und/oder Müllverbrennung weitergeleitet. Ggf. kann die aus dem Balistikseparator 3 ausscheidende Schwerfraktion 7 mittels Metall- und/oder Nichtmetallabscheidern nochmals behandelt werden, ggf. auch manuell, sollte dies erwünscht sein.

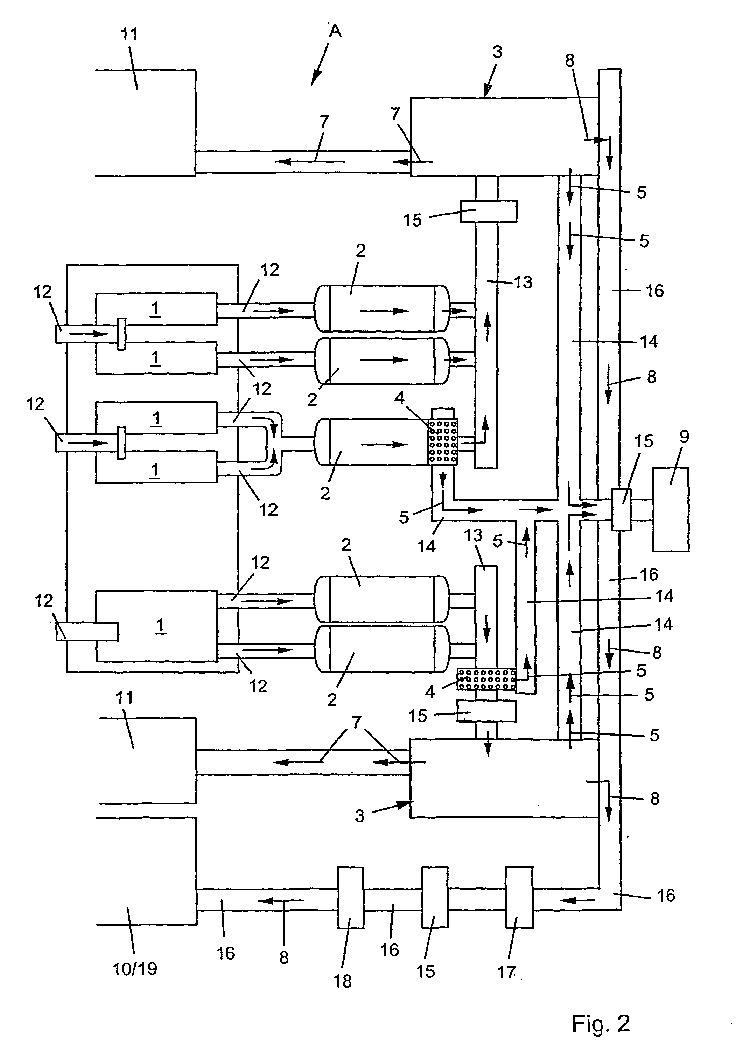

In dem Ausführungsbeispiel der vorliegenden Erfindung gemäss Figur 2 ist schematisch eine erfindungsgemässe Anlage A zur Durchführung des Verfahrens aufgezeigt. Dabei sind die einzelnen Verfahrensschritte, wie sie in Figur 1 aufgezeigt sind, integriert.

Bei der vorliegenden Anlage A wird der oben beschriebene Abfall über eine Aufgabe 12 einem oder mehreren Bunkern 1 zugeführt. Von dem Bunker 1 wird kontinuierlich über Transporteinrichtungen 12 der Abfall zu einer Konditioniereinrichtung 2 befördert. Dabei können auch die Fraktionen von einem oder mehreren Bunkern 1 zusammengefasst bzw. zusammengeführt einer einzelnen Konditioniereinrichtung 2 zugeführt werden. Auch ist denkbar aus einem einzelnen Bunker 1 mehrere Konditioniereinrichtungen 2 zu beschicken. Hierauf soll die Erfindung nicht begrenzt sein.

Wichtig bei der vorliegenden Erfindung ist, dass kontinuierlich der Abfall der Konditioniereinrichtung 2 zugeführt, in dieser kontinuierlich der Abfall aufbereitet und aus dieser kontinuierlich der aufbereitete Abfall einem Transportband 13 zugeführt wird. Dabei kann während des Konditionierens der Konditioniereinrichtung 2, die insbesondere als Konditioniertrommel ausgebildet ist, die Gesamtfeuchtigkeit während des Konditionierens durch Zugabe von Schlamm, Wasser, Gülle od. Nassabfall od. dgl. beeinflusst werden. Hierdurch wird eine Gesamtfeuchte in Abhängigkeit von der Eingangsfeuchte kontinuierlich gesteuert, die eine gewünschte Trennschärfe der zu separierenden Fraktion zur Ablösung von organischen Bestandteilen von den verbleibenden Fraktionsbestandteilen gewährleistet.

Ggf. kann auch der Konditioniereinrichtung 2, wie es in Figur 2 angedeutet ist, direkt ein Abschnitt 4 angeschlossen sein, der über ein Transportmittel 14 die Feinfraktion 5 der biologischen Stufe 9 zuführt. Dabei kann auch ein Siebabschnitt 4 dem Transportband 13 als separates Bauteil nachgeschaltet sein, sollte dies erwünscht sein. Dieses steht dann ebenfalls mit dem Transportmittel 14 in Verbindung und befördert die Feinfraktion 5 zur Weiterbearbeitung kontinuierlich zur biologischen Stufe 9. Ggf. kann der biologischen Stufe 9 eine Reinigungsstufe zur Abscheidung von Inertteilen, Metallteilen oder SBS-Schnipsel ein Metallabscheider 15 od. dgl. vorgeschaltet sein.

Das Transportband 13 stellt die Verbindung zwischen den Konditioniereinrichtungen 2 und wenigstens einem Balistikseparator 3 her. Der Balistikseparator 3 hat die Aufgabe, die homogenisierte und aufbereitete Fraktion an Abfall, aus welcher ggf. über den Siebabschnitt 4 ein Teil der Feinfraktion 5 separiert wurde, in drei unterschiedliche Fraktionen zu separieren. Vorzugsweise ist im Anschluss an die jeweiligen Konditioniereinrichtungen 2 vor dem Balistikseparator 3 ein weiterer Metallabscheider 15 in das Transportband 13 eingesetzt. Hierüber werden entsprechende Metallfraktionen separiert und ausgeschieden.

Im Balistikseparator 3 erfolgt dann die eigentliche Aufbereitung und Trennung in drei Hauptfraktionen. Die Hauptfraktionen sind die Feinfraktion 5, die Leichtfraktion 8 und die Schwerfraktion 7. Die Feinfraktion 5 wird über die Transportmittel 14 der oben erwähnten biologischen Stufe 9 zugeführt.

Ferner wird eine Schwerfraktion 7 aus dem Balistikseparator 3 separiert und der Deponie 11 zur Deponierung oder Müllverbrennung weitergeleitet. Dabei können der Schwerfraktion 7 weitere Wertstoffe mittels bekannter Verfahren entzogen werden.

Die Feinfraktion 5 wird in der biologischen Stufe 9 einer aeroben und/oder einer anaeroben Behandlung unterzogen, wobei hieraus die organischen Anteile reduziert werden. Ggf. können im Anschluss an die biologische Stufe 9 hier nicht näher dargestellte Metallabscheider oder hier nicht näher dargestellte Kompostierbehandlungen folgen. Wichtig bei der vorliegenden Erfindung ist jedoch, dass aus dem Balistikseparator 3 die hochkalorische Leichtfraktion 8 separiert wird und über weitere Transportmittel 16, die mit den jeweiligen Balistikseparatoren 3 in Verbindung stehen, einem Zerkleinerer 17 zugeführt werden. Im Zerkleinerer 17 lässt sich die kalorische Leichtfraktion 8 zu sogenannten Pellets aufbereiten. Ggf. sind in das Transportmittel 16 vor und/oder nach dem Zerkleinerer 17 ein weitere Metallabscheider 15 und ein Nichtmetallabscheider 18 eingesetzt.

In einem Sammelbunker 19 wird dann die zur Ersatzbrennstoff bzw. zur Sekundärbrennstoff bearbeiteten Leichtfraktion 8 eingelagert, direkt verwertet oder weitertransportiert.

Die Leichtfraktion 8 kann einer beliebigen Aufbereitung direkt oder indirekt zugeführt werden und beliebig mittels bekannten Verfahren zu marktgerechten und geforderten Sekundärbrennstoffen weiterverarbeitet werden.

| **Positionszahlenliste** | | | | | |
|---|---|---|---|---|---|
| 1 | Bunker | 34 | | 67 | |
| 2 | Konditioniereinr. | 35 | | 68 | |
| 3 | Separiereinrichtung | 36 | | 69 | |
| 4 | Siebabschnitt | 37 | | 70 | |
| 5 | Feinfraktion | 38 | | 71 | |
| 6 | Überlauf | 39 | | 72 | |
| 7 | Schwerfraktion | 40 | | 73 | |
| 8 | Leichtfraktion | 41 | | 74 | |
| 9 | biolog.Stufe | 42 | | 75 | |
| 10 | Ersatzbrennst. | 43 | | 76 | |
| 11 | Deponie | 44 | | 77 | |
| 12 | Transporteinr. | 45 | | 78 | |
| 13 | Transportband | 46 | | 79 | |
| 14 | Transportmittel | 47 | | | |
| 15 | Metallabscheid. | 48 | | | |
| 16 | Transportmittel | 49 | | | |
| 17 | Zerkleinerer | 50 | | | |
| 18 | Nichtmetallabscheider | 51 | | | |
| 19 | Sammelbunker | 52 | | A | Anlage |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Aufbereitung von Abfall, Müll, Hausmüll, Restmüll, Gewerbemüll od. dgl., welcher in wenigstens einem Bunker gesammelt, anschliessend zumindest einer Konditioniereinrichtung, insbesondere Konditioniertrommel zur Konditionierung zugeführt wird,
**dadurch gekennzeichent,**
dass in einem kontinuierlichen Verfahren der aufzubereitende Abfall die Konditioniereinrichtung (2) kontinuierlich durchläuft und kontinuierlich zur weiteren Aufbereitung weitertransportiert wird, wobei nach einer Konditionierung eine Separierung des Abfalls in eine Schwerfraktion (7), eine Leichtfraktion (8) und in eine Feinfraktion (5) erfolgt, wobei die Feinfraktion (5) einer biologischen Stufe (9) zur anaeroben und/oder aeroben Weiterbehandlung zugeführt wird und zur kontinuierlichen Konditionierung in der Konditioniereinrichtung (2) dem Abfall zusätzlich Feuchtigkeit, in Form von Schlamm, Wasser, Gülle, Nassabfall od. dgl. zur Aufweichung von Organikanteilen und Loslösung von verbleibenden Fraktionen sowie zur Bindung von Staubpartikeln und zur Unterstützung einer biologischen Separierung kontinuierlich oder diskontinuierlich zugeführt wird.

2. Verfahren nach Anspruch 1, **dadurch gekennzeichnet, dass** der kontinuierlich aus der Konditioniereinrichtung (2) austretende Abfall kontinuierlich oder diskontinuierlich zumindest einer Separiereinrichtung (3), insbesondere einem Ballistikseparator zur Separierung des Abfalles in eine Schwerfraktion (7), in eine Leichtfraktion (8) und eine Feinfraktion (5), zugeführt wird.

3. Verfahren nach Anspruch 1 oder 2, **dadurch gekennzeichnet, dass** im Anschluss an die Konditioniereinrichtung (2) ggf. eine kontinuierliche Separierung einer Feinfraktion (5) über einen ggf. der Konditioniereinrichtung (2), insbesondere der Konditioniertrommel zugeordneten Siebabschnitt (4) erfolgt, wobei die separierte Feinfraktion (5) einer biologischen Stufe (9) kontinuierlich zugeführt wird.

4. Verfahren nach wenigstens einem der Ansprüche 1 bis 3, **dadurch gekennzeichnet, dass** der kontinuierlich aus der Konditioniereinrichtung (2) austretende und aufbereitete konditionierte Abfall vor einer weiteren Aufbereitung einem Metallabscheider (15) zugeführt wird.

5. Verfahren nach wenigstens einem der Ansprüche 2 bis 4, **dadurch gekennzeichnet, dass** der kontinuierlich aus der Konditioniereinrichtung (2) austretende konditionierte Abfall kontinuierlich in der Separiereinrichtung (3), insbesondere im Ballistikseparator (3) in die Schwerfraktion (7), die Leichtfraktion (8) und die Feinfraktion (5) separiert wird und kontinuierlich die Feinfraktion einer biologischen Stufe (9) zugeführt, die Leichtfraktion (8) ggf. über Metall- und/oder Nichtmetallabscheider (15, 18) zur Weiterverarbeitung bzw. Herstellung von Sekundärbrennstoffen (EBS) gesammelt oder direkt weitertransportiert wird, wobei die Schwerfraktion (7) ggf. durch weitere Metall- und/oder Nichtmetallabscheider zur Weiterverarbeitung in einer Deponie (11) oder Müllverbrennungsanlage gesammelt oder direkt verarbeitet und/oder manuell nachsortiert wird.

6. Verfahren nach wenigstens einem der Ansprüche 2 bis 5, **dadurch gekennzeichnet, dass** die aus dem Ballistikseparator (3) kontinuierlich separierte Feinfraktion (5) sowie die durch die ggf. der Konditioniereinrichtung (2) nachgeschaltete Separierung mittels eines Siebabschnittes (4) gewonnene Feinfraktion (5) kontinuierlich einer biologischen Stufe (9) zur anaeroben und/oder aeroben Weiterbehandlung zugeführt wird.

7. Verfahren nach wenigstens einem der Ansprüche 1 bis 6, **dadurch gekennzeichnet, dass** der Abfall kontinuierlich in die Konditioniereinrichtung (2) aufgegeben wird und ggf. Müllsäcke mittels entsprechenden Einbauten innerhalb der Konditioniereinrichtung (2) aufgerissen und entleert werden, wobei der Müll hierdurch aufgeschlossen und homogenisiert wird.

## Claims

1. Method of preparing waste, refuse, domestic refuse, residual refuse, industrial refuse or the like, which is collected in at least one bin and is subsequently supplied to at least one treating means, more especially a treating drum for treatment purposes, **characterised in that**, in a continuous method, the waste to be prepared passes continuously through the treating means (2) and is continuously transported further for further preparation, whereby, after a treatment process, the waste is separated into a heavy fraction (7), a light fraction (8) and a fine fraction (5), the fine fraction (5) being supplied to a biological stage (9) for anaerobic and/or aerobic further treatment and, for the continuous treatment in the treating means (2), moisture in the form of sludge, water, manure, wet waste or the like is additionally supplied to the waste, continuously or discontinuously, to soften organic proportions and loosen remaining fractions, as well as to bond dust particles and to promote a biological separation.

2. Method according to claim 1, **characterised in that** the waste, continuously emerging from the treating means (2), is supplied continuously or discontinuously to at least one separating means (3), more especially to a ballistic separator, for separating the waste into a heavy fraction (7), a light fraction (8) and a fine fraction (5).

3. Method according to claim 1 or 2, **characterised in that**, in association with the treating means (2), a continuous separation of a fine fraction (5) via a perforated portion (4), possibly associated with the treating means (2), more especially with the treating drum, is possibly effected, the separated fine fraction (5) being continuously supplied to a biological stage (9).

4. Method according to at least one of claims 1 to 3, **characterised in that** the treated waste, continuously emerging from the treating means (2) and having been prepared, is supplied to a metal filter (15) prior to further preparation.

5. Method according to at least one of claims 2 to 4, **characterised in that** the treated waste, continuously emerging from the treating means (2), is continuously separated in the separating means (3), more especially in the ballistic separator (3), into the heavy fraction (7), the light fraction (8) and the fine fraction (5), and the fine fraction is continuously supplied to a biological stage (9), and the light fraction (8) is collected or directly transported further, possibly via metal and/or non-metal filters (15, 18), for further processing or respectively for producing secondary fuels (EBS), the heavy fraction (7) being collected or directly processed and/or manually re-sorted by additional metal and/or non- metal filters for further processing in a depository (11) or refuse incinerator.

6. Method according to at least one of claims 2 to 5, **characterised in that** the fine fraction (5), continuously separated from the ballistic separator (3), as well as the fine fraction (5), obtained through the separation by means of a perforated portion (4), said separation possibly being effected downstream of the treating means (2), is continuously supplied to a biological stage (9) for anaerobic and/or aerobic further treatment.

7. Method according to at least one of claims 1 to 6, **characterised in that** the waste is continuously transferred to the treating means (2), and possibly refuse bags are ripped open and emptied by means of appropriate components within the treating means (2), the waste being hereby broken-down and homogenised.

## Revendications

1. Procédé pour le traitement de déchets, d'ordures, d'ordures ménagères, de rejets résiduaires, d'ordures industrielles ou autres, qui sont collectés dans au moins une fosse de réception, ensuite alimentés vers au moins un dispositif de conditionnement, en particulier un tambour de conditionnement pour leur conditionnement,
**caractérisé par le fait**
**que** dans un procédé continu les déchets à traiter passent en continu à travers le dispositif de conditionnement (2) et sont transportés en continu vers le traitement successif, après un conditionnement ayant lieu une séparation des déchets en une fraction lourde (7), une fraction légère (8) et en une fraction fine (5), la fraction fine (5) étant alimentée vers un étage biologique (9) pour le traitement anaérobie et/ou aérobie successif, et pour le conditionnement en continu dans le dispositif de conditionnement (2) étant ajouté en continu ou par intermittence aux déchets en outre de l'humidité sous forme de boue, d'eau, d'engrais liquide, de déchets humides ou autres, en vue de ramollir les parties organiques et de détacher les fractions restantes ainsi qu'en vue de lier les particules de poussière et en vue d'assister une séparation biologique.

2. Procédé selon la revendication 1, **caractérisé par le fait que** les déchets sortant en continu du dispositif de conditionnement (2) sont alimentés en continu ou par intermittence vers au moins un dispositif de séparation (3), en particulier un séparateur balistique, pour séparer les déchets en une fraction lourde (7), une fraction légère (8) et une fraction fine (5).

3. Procédé selon la revendication 1 ou 2, **caractérisé par le fait qu'**après le dispositif de conditionnement (2) a lieu éventuellement une séparation en continu d'une fraction fine (5) par l'intermédiaire d'un segment de crible (4) éventuellement associé au dispositif de conditionnement (2), en particulier au tambour de conditionnement, la fraction fine séparée (5) étant alimentée en continu vers un étage biologique (9).

4. Procédé selon au moins l'une des revendications 1 à 3, **caractérisé par le fait que** les déchets conditionnés traités sortant en continu du dispositif de conditionnement (2) sont alimentés, avant un traitement ultérieur, vers un séparateur de métaux (15).

5. Procédé selon au moins l'une des revendications 2 à 4, **caractérisé par le fait que** les déchets conditionnés sortant en continu du dispositif de conditionnement (2) sont séparés en continu, dans le dispositif de séparation (3), en particulier dans le séparateur balistique (3), en la fraction lourde (7), la fraction légère (8) et la fraction fine (5) et que la fraction fine est alimentée en continu vers un étage biologique (9), que la fraction légère (8) est collectée, éventuellement par l'intermédiaire de séparateurs de métaux et/ou de non-métaux (15, 18), pour le traitement ultérieur ou la fabrication de combustibles secondaires (BBS) ou directement transportée plus loin, la fraction lourde (7) étant collectée, éventuellement en passant par d'autres séparateurs de métaux et/ou de non-métaux, pour le traitement ultérieur dans une décharge (11) ou dans une installation d'incinération d'ordures, ou étant traitée directement et/ou triée manuellement.

6. Procédé selon au moins l'une des revendications 2 à 5, **caractérisé par le fait que** la fraction fine (5) séparée en continu du séparateur balistique (3) ainsi que la fraction fine (5) obtenue par la séparation, éventuellement connectée en aval du dispositif de conditionnement (2), au moyen d'un segment de crible (4) sont alimentées en continu vers un étage biologique (9), pour le traitement anaérobie et/ou aérobie successif.

7. Procédé selon au moins l'une des revendications 1 à 6, **caractérisé par le fait que** les déchets sont amenés en continu dans le dispositif de conditionnement (2) et que, éventuellement, des sacs d'ordures sont déchirés et vidés au moyen de dispositifs appropriés incorporés à l'intérieur du dispositif de conditionnement (2), les ordures étant ainsi aérées et homogénéisées.
